# EUROPEAN PATENT SPECIFICATION

(11) **EP 1 831 852 B1**
(45) Date of publication and mention of the grant of the patent: **01.01.2014**
(21) Application number: 05813154.1
(22) Date of filing: 25.11.2005
(51) Int. Cl.: H04Q 9/00

(54) **WIRELESS MEASURING ARRANGEMENT AND A MEASURING DEVICE UTILIZED IN IT**
DRAHTLOSE MESSANORDNUNG UND DARIN VERWENDETE MESSEINRICHTUNG
SYSTEME DE MESURE SANS FIL ET DISPOSITIF DE MESURE UTILISE DANS CELUI-CI

(30) Priority: 01.12.2004 FI 20041554
(43) Date of publication of application: 12.09.2007
(73) Proprietor: Cermot Oy, 90550 Oulu (FI)
(72) Inventor: MÄÄTTÄ, Hannu, 90100 Oulu (FI)
(74) Representative: Määttä, Jukka Tapani
(86) International application number: PCT/FI2005/050436
(87) International publication number: WO 2006/058966

(56) References cited:
- WO-A1-99/21147
- WO-A2-02/058327
- WO-A2-03/061175
- WO-A2-03/079717
- JP-A- 2002 218 080
- US-A1- 2003 174 067

## Description

The invention relates to a measurement arrangement comprising measuring devices with sensors, in which measurement arrangement the measuring devices form a self-organized radio network having at least two levels, which can be connected to an external device or communication network through at least one measuring device belonging to the highest level of the radio network. The invention also pertains to a wireless measuring device used in the measurement arrangement.

Such an arrangement is already disclosed in document WO 03/079717.

The process control of industrial plants has conventionally been implemented by centralized systems. Since conventional automation systems are chiefly based on transmission of analog signals in the form of current loop signals, the sensors and actuators of the system are each individually connected to the central control unit, which monitors and controls the process, over at least one conductor pair. The construction and maintenance of such a starlike process control system requires a large amount of cabling and switching work. Making changes or additions to the existing system requires time-consuming and expensive changes of cabling.

An alternative cabling method of an automation system is a digital field bus. As to its architecture, a field bus is similar to an Ethernet network known from office automation. The field bus cable is directed to run through the desired actuators. Both digital measurement signals and digital control instructions intended to different actuators are transmitted in the same cable. In a field bus solution, the need for cabling is reduced in comparison to the conventional automation system with starlike cabling, because one cable may go round from one actuator to another. Although the field bus solution facilitates the design of cabling in an automation system and reduces the physical need for cabling, making extensions or changes afterwards is still time-consuming and causes additional costs.

Automation systems have also been proposed to be built as wireless systems based on a radio network. Technical maintenance of complicated radio networks requires frequent radio communication between devices belonging to the radio network. Radio communication is used for transmitting both measurement information or control instructions in the process being controlled and messages maintaining the operation of the radio network itself. This causes a lot of radio communication, and therefore the radio transmitters belonging to the system have relatively high electric power requirements in order to operate reliably. Thus it has become a problem in the prior art wireless systems to arrange the power feed of sensors and actuators in a way that the operation of the whole system is not endangered if the power feed of some actuator or sensor is interrupted. This problem is often encountered in connection with devices having battery backup. Especially batteries in devices that continuously communicate wirelessly have a very limited operating time, only a few days at the worst. A situation like this is not possible in automation systems, because it becomes difficult and expensive to manage the operation of the power supplies of measurement devices. In addition, the drainage of the battery of an actuator or sensor may cause the whole process connected to the automation system to fail, or a situation may arise in which human life is endangered or material damage may be caused.

The formation of a radio network which constitutes the core of an automation system can be implemented as a self-organizing process. A wireless, multi-level and self-organizing measurement/communication arrangement has been presented in the published application WO 03/061175. The sensors belonging to the arrangement can be set to a sleep mode for saving the batteries. However, in the system according to this reference, all the wireless sensors of "the lowest level" belonging to it use the same communication system, e.g. Bluetooth, as the devices that constitute "the higher level". Consequently, communication means utilizing the communication system used on the higher level must be installed in measuring devices operating on the lowest level. This increases the power consumption of measuring devices of the lowest level, and thus shortens their operating time when used with batteries.

It is an objective of the invention to provide a measuring device arrangement and a measuring device, whereby the measurement part of an automation system implemented by cables can be replaced by a self-organizing system based on a wireless radio network, in which the batteries of individual measuring devices have long duration.

The objectives of the invention are achieved by a device arrangement in which individual sensors are networked into small cells by a radio network using a transmission technology which allows low transmission power, and a simple communication protocol. The cells formed by the sensors are then networked together by a radio network in compliance with the Bluetooth or ZigBee standard. Devices operating in a radio network can save their batteries by switching to a sleep mode, in which their power consumption is very low. An individual measuring device wakes itself up or is waken up only at certain times, when it can receive and transmit data.

The method according to the invention has the advantage that the sensor network of the automation system or a part thereof can be built in a short time when required, without a fixed cable network.

In addition, the invention has the advantage that when measuring devices are networked together into a cell, a very simple communication protocol and low transmission power can be used.

The invention also has the advantage that a non-standardized procedure can be used as the communication protocol.

Yet another advantage of the invention is the fact that the measurement system can easily be expanded because of its self-organizing manner of operation. The measuring devices are installed in place, and consequently they network themselves first into small measurement cells, and then in the second step in each measurement cell into a communication network operating by means of devices specified as a master device, whereafter the communication network can be utilized as a part of the automation system.

Furthermore, the invention has the advantage that it is possible to provide the sensors and actuators with integrated functions, which in fixed prior art systems are only available in the central control unit of the system.

The measurement arrangement implemented by means of a multi-level radio network according to the invention, in which a particular communication protocol is used on the highest level, is characterized in that in order to maximize the operating time of the power source of the measuring device of the measuring arrangement on the lowest level of the radio network in an individual measuring cell, which comprises at least the master device of the measuring cell and at least one measuring device, messages are arranged to be transmitted using FM, AM, OOK or AM/FM modulation on at least one frequency without utilizing a particular communication protocol.

The wireless measuring device according to the invention is characterized in that in order to maximize the operating time of the power source of the measuring device, the measuring device is arranged to transmit its message in the radio network to another measuring device belonging to a higher level of the radio network as FM, AM, OOK or AM/FM modulated without using a particular communication protocol, which is utilized on the higher level of the radio network.

Some preferred embodiments of the invention are presented in the dependent claims.

The basic idea of the invention is the following: A measurement arrangement of an automation system is implemented by measuring devices, which are capable of networking themselves automatically into measuring cells in a radio network, in which the communication protocol utilized is simple, preferably not standardized, and low-power radio transmitters are used. Each measuring device has a transceiver and at least a battery for producing the electric energy required in the message traffic. The measuring devices and actuators of the system are installed in place, whereafter they organize themselves into a radio network in which messages can be transmitted from one measuring device or actuator to another either directly or via third devices. Messages are preferably transmitted on some ISM (Industrial-Scientific-Medical) frequency. A simple, advantageously non-standardized transmission protocol and a modulation method minimizing power consumption is utilized in the transmission of messages in order to minimize the electric power required in transmission.

In each measuring cell formed, one of the measuring devices of the measuring cell functions as a master device, which can also function in a radio network complying with either the Bluetooth, ZigBee or WLAN (Wireless Local Area Network) standard. By utilizing either the Bluetooth, ZigBee or WLAN radio network, the desired measurement system, which can advantageously be connected as part of the actual automation system, can be formed of the measuring devices. The communication required by the actuators of the automation system can advantageously also take place through this formed radio network. One part connected to this radio network is advantageously the central control unit of the automation system, which controls the process connected to the automation system on the higher level. The central control unit advantageously sends control instructions to the measuring devices, sensors and actuators through said radio networks.

An individual measuring device connected to the automation system advantageously goes to the sleep mode after carrying out a function specified for it. It awakens itself from this sleep mode after a time specified for it, whereupon it advantageously checks, as its first action, if there is a message for it saved in the radio network according to the invention. If a new message is not found, the device returns to the sleep mode, if no other measurement action has been programmed for it in advance. If there is a message or instruction to the measurement device in the network, the measuring device adopts the operating mode defined for it and carries out the operation specified for it. After the operation, the measuring device returns to the sleep mode. Because the measuring device stays a long time in the sleep mode, in which power consumption is very low, its batteries maintain their operating charge for a long time, even several months. Advantageously, an individual measuring device communicates the drainage of its battery via the radio network to the automation system, and consequently the changing or maintenance of the measuring device can be performed in a controlled manner without interfering with the operation of the process. It is thus unlikely that the measurement system according to the invention would run into failure because of the drainage of a battery.

In the following, the invention will be described in detail. Reference will be made to the accompanying drawings 1, in which
- Fig. 1: shows the functional main parts of the measuring device according to the invention by way of example, and
- Fig. 2: shows an example of the application of a measurement arrangement according to the invention in a simple temperature and pressure measurement system.

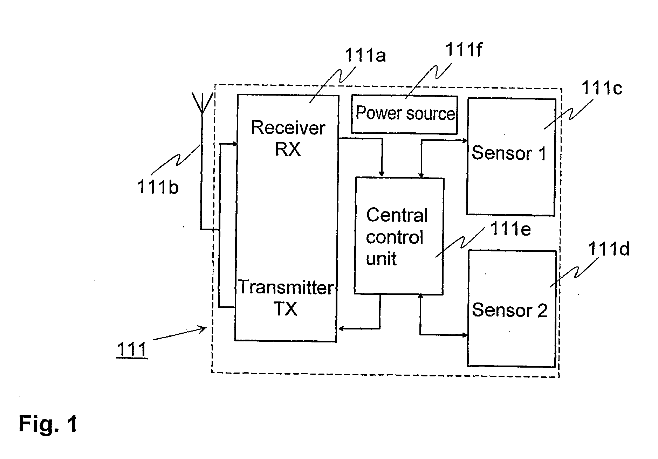

Fig. 1 shows the functional main parts of the measuring device 111 according to the invention. The measuring device advantageously comprises an antenna 111 b, a transceiver 111a, a power source 111f, a central control unit 111e and two exemplary sensors 111c and 111d. The measuring device shown in Fig. 1 can advantageously be manufactured by the LTCC (Low Temperature Cofired Ceramic) or HTCC (High Temperature Cofired Ceramic) technique. These manufacturing techniques enable the encapsulation of the electronic, power and sensor units of the measuring device 111 according to the invention hermetically into one compact entity. The hermetic measuring device capsule according to the invention can be placed in the desired point of the process being measured without cable connections.

The antenna 111 b of the measuring device 111 has been integrated as part of the ceramic sensor capsule. The shape and size of the antenna 111 b are determined on the basis of the transmission frequency and method of transmission used. The transceiver 111 a of the measuring device 111 is advantageously of the kind that uses only one transmission frequency at the same time of transmission. In another advantageous embodiment of the invention, transmission frequencies that differ from each other are utilized on two consecutive times of transmission. In the third advantageous embodiment of the invention, it is also possible to apply frequency hopping in order to minimize interference. FM modulation (Frequency Modulation), AM modulation (Amplitude Modulation), OOK modulation (On/Off Keying) or combined AM/FM modulation, for example, can be used as the signal modulation method. The transmitter TX of the measuring device 111 is on only at the moments when the measuring device 111 transmits the measurement data of its sensors 111 c and/or 111 d or some control message programmed and timed for the measuring device 111.

The operation of the measuring device 111 is controlled by the central control unit 111 e, which advantageously includes a microprocessor having a low consumption of electric power. The central control unit 111 e advantageously also comprises a memory unit and in some embodiments also an A/D converter for converting the sensor signals into digital signals. In an advantageous embodiment of the invention, the measuring sensors perform the A/D conversion.

The messages or instructions coming from the receiver RX are interpreted and implemented by the central control unit 111 e. The instructions are advantageously measurement instructions to the sensors 111 c, 111 d. The measuring device 111 can also receive an instruction to go to the sleep mode for a time of certain duration.

Through the transmitter TX, the central control unit 111e transmits the measurement results of sensors 111c, 111d. The time between two consecutive measurements varies from a few seconds to several minutes, depending on the object of the measurement. The central control unit 111 e also sends other control messages programmed for the measuring device 111 by the transmitter TX. The transmission power of the transmitter TX can be designed as low, in which case its range is short, such as only some tens of metres, for example.

In the transmission of messages between the measuring device 111 and the master device of the cell serving it, an FM, AM, OOK or AM/FM transmission, for example, is used on some freely usable ISM frequency. A transmission in digital form can advantageously be sent without error detection or encryption coding. With this procedure, the signal processing in the measuring device 111 required by communication can be kept simple, in which case it does not require high signal processing capability of the central control unit 111e, either.

In the example of Fig. 1, the measuring device 111 comprises two sensors; sensors 1 and 2, references 111 c and 111 d. The measuring device 111 according to the invention can naturally also comprise more similar or different sensors, depending on the equipment for which it is used. The sensors can measure temperature, pressure, humidity, acceleration, position, light intensity, surface level, speed of rotation or various chemical releases caused by the process being monitored. The measuring sensors can be either continuously operating or activated separately for each measurement. The measurement signals received from the sensors 111c, 111d are converted to digital form for communication either in the sensor itself or in the central control unit 111 e. Communication from the measuring device 111 outward is implemented by the same simple method of communication for all the sensors of the measuring device 111. When this method is used, it is not necessary to use separate communication protocols in the communication from the measuring device 111 to the master device controlling its cell.

The structural and functional properties of the measuring device 111 described above contribute to the fact that its power source 111f remains in the operating condition for a long time. In an advanatageous embodiment of the invention, the power source 111f comprises a diagnostic circuit, which monitors the charge status of the power source 111f. When the charge status falls below a predetermined value, the measuring device 111 sends the automation system a message indicating that the operating time of the measuring device 111 will soon terminate. Having received that message, the user of the automation system can take measures to install a new sensor to replace the old one, if it is still needed.

The measuring device 111 described above has simple operations and a simple structure, and hence its manufacturing costs are also low. Due to its hermetic structure, it is also reliable. From the user's point of view, it is easy to install as part of the measuring process, because the measuring devices can organize themselves into a message network, which becomes connected to the actual automation system.

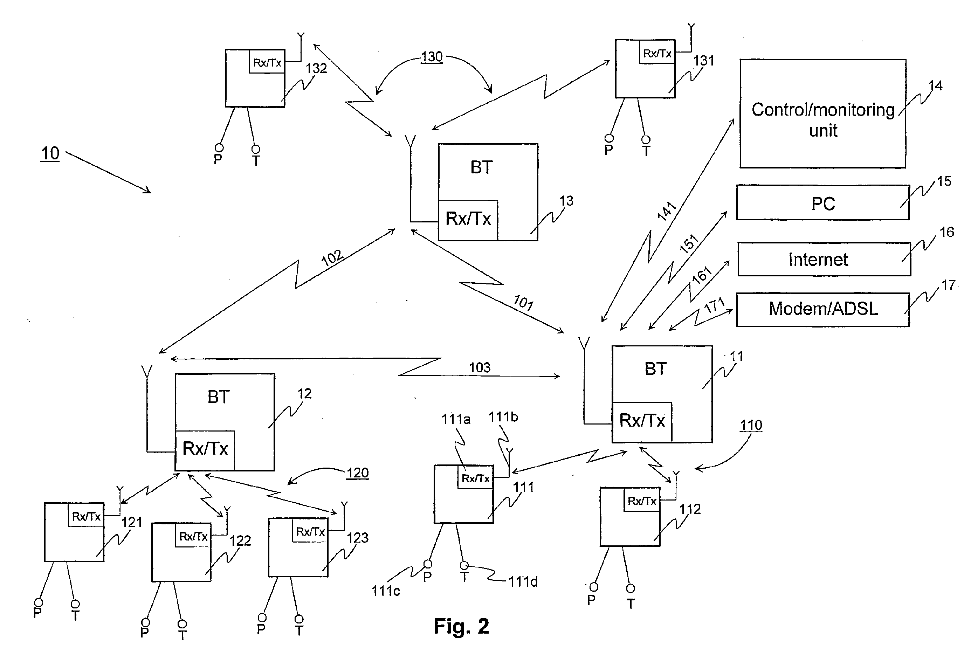

Fig. 2 is an example of a temperature and pressure measurement system 10, which advantageously also includes electric and/or mechanical actuators not shown in Fig. 2. The example of Fig. 2 is intended to illustrate the main parts of a measurement arrangement according to the invention and the functional connections between them.

The example shown in Fig. 2 is a measurement arrangement 10, which is used to measure temperature and pressure in a process in which these measurement quantities can be used as the control quantities of the process. Various mechanical, hydraulic, pneumatic or electric actuators, which are not shown in Fig. 2, can also advantageously be utilized in the control of this process. The energy requirement of actuators is generally so high that the energy supply of actuators is secured by fixed energy supply systems. However, various measuring activities on the process of Fig. 2 can be carried out by the measurement arrangement according to the invention, in which the measuring devices or sensors installed in the process need not be connected by fixed cables in a control system utilizing the measurement results. The wired and wireless part of the control arrangement can then together form a so-called automation system, by which the industrial process can be supervised and controlled.

For the management of the automation system, it is provided with a separate control unit 14. By the control unit 14, the operating personnel supervises and controls the process. The control unit 14 can be connected to the measurement arrangement according to the invention by the connection 141, for example. It may be a suitable radio connection, as in Fig. 2, or a wired connection to a device operating in a system according to the invention, having the task of administering the operation of the radio network.

The radio network according to the invention shown in Fig. 2 advantageously complies with either the ZigBee or Bluetooth standard on the highest level of the radio network, references 101, 102, 103, 141, 151, 161 and 171. It is also possible to utilize a radio network complying with the WLAN standard. The communication between individual measuring devices on the lowest level, i.e. the level of an individual measuring cell, e.g. the measuring devices 12, 121, 122 and 123, is implemented by a simpler, advantageously non-standardized, communication procedure. In the example of Fig. 2, the measuring devices 11, 12 and 13 are advantageously equipped with means by which they can operate both on the highest and the lowest level of the network according to need. Instead, it is advantageous that the measuring devices 111, 112, 121, 122, 123, 131 and 132 can only operate on the lowest level of the radio network, the level of individual cells.

In an advantageous embodiment of the invention, the radio network of the highest level is a ZigBee radio network IEEE 802.15.4 (Institute of Electrical and Electronics Engineers), which is a digital radio network operating on the frequencies 868 MHz (Europe), 915 MHz (USA) or 2400 MHz. The method of operation is DSSS (Direct Sequence Spread Spectrum), and the data rate is 20 or 250 kbit/s. When the ZigBee radio transmitter is in the transmission mode, its power consumption is approx. 5 mA.

The basic architecture of the ZigBee radio network is starlike, but the point-to-point method of operation is also possible. One ZigBee radio network with starlike structure may include 64 000 individual transceivers. The maximum range of an individual radio link is of the order of some tens of metres. In order to enable the operation of the radio network, one of the devices of the ZigBee radio network must adopt the role of a network coordinator, which has the task of controlling the establishment of a ZigBee radio network. The network coordinator also controls the nodes of the ZigBee network, if nodes have been formed in the network. An individual node and devices connected to it form a starlike radio network, which is then connected, advantageously by a point-to-point radio connection, to another node of the same radio network. Each node queries the network coordinator at times whether it has messages for the devices administered by it. If there are messages, the network coordinator transmits them to the node which made the query, which again transmits the message further to the device to which it was originally addressed. When this procedure is used, a single device need not do anything else but check at times from its own node if the node has messages addressed to it. For the rest of the time, the device can stay in the sleep mode, which saves its batteries.

In another advantageous embodiment of the invention, the radio network of the highest level is a Bluetooth radio network complying with the standard IEEE 802.15.1. Its operating frequency is 2.45 GHz and its mode of operation FHSS (Frequency Hopping Spread Spectrum). In the Bluetooth radio network, the data rate can be 1 Mbit/s. The Bluetooth radio network has a starlike basic structure, and it is called a piconet. Each piconet may comprise 2 to 8 devices. In general, the first device activated in a certain piconet functions as the master in that piconet. Other devices connected to the same piconet later become connected under its control as slave devices. More than one piconet complying with the Bluetooth standard can operate in the same area, in which case they can become networked into one radio network, i.e. a so-called scatternet. In that case, devices that function as masters in different piconets function in the scatternet radio network as nodes, which exchange information between devices connected to different piconets, when required.

There are three different classes of transmission power in use in the Bluetooth radio network, and hence the range of the Bluetooth radio network varies from 10 cm up to 100 m. By default, the Bluetooth networks are designed on the basis of the range of approx. 10 m. In such a radio network, the default power consumption of an individual Bluetooth transmitter is approx. 20 mA when the transmitter is in operation. In the Bluetooth network, an individual device can also go to the sleep mode, from which it awakens itself at times. By this procedure, a device operating as battery-powered can save its energy resources.

In the example of Fig. 2, a ZigBee network has been used as the radio network of the highest level, because the average power consumption of ZigBee transmitters is clearly lower than in the alternative Bluetooth network. In addition, the limits of a Bluetooth network, which allow eight devices at the most in the same piconet, do not apply to the construction of a ZigBee radio network. In the example of Fig. 2, the base station (BT) 11 functions as the network coordinator. Other measuring devices 12 and 13 shown in Fig. 2 function as individual nodes of the ZigBee radio network 10. Each one of the above mentioned base stations BT comprises a transceiver Rx/Tx and an antenna connected to it. Like the measuring devices, the base stations BT can naturally also comprise various sensors, which are not shown in Fig. 2. The devices 11, 12 and 13, which function as nodes, are advantageously equipped with a fixed power supply, because they are continuously in the operating mode and consume energy all the time. However, each individual measuring device, such as the measuring devices 121 to 123, is wirelessly connected to the master device of its own cell. These measuring devices can advantageously use only batteries as the source of electric energy, because they spend a considerable amount of time in the sleep mode. The duration of the batteries is also improved by the low transmission power of communication in the measuring cell.

In the example of Fig. 2, two measuring devices, 111 and 112, are connected to node 11 of the ZigBee network via a starlike radio network 110. Advantageously only one ISM frequency is used on the radio connection 110 of the lowest level at one time of transmission. Because the size of one measuring cell is small, the transmission power can be kept low. In an advantageous embodiment of the invention, each measuring device is provided with its own fixed frequency, in which case their radio transmissions do not interfere with each other. In such an embodiment, the master device of the cell must be able to receive and transmit on several frequencies. The radio connection 110 having a fixed frequency is not active all the time, but the measuring devices 111 and 112 are in the sleep mode for most of the time for saving their batteries.

In another advantageous embodiment of the invention, when a new connection is established for the radio connection 110 having a fixed frequency, it is established using a different frequency than at the previous time when the connection was established.

In a third advantageous embodiment of the invention, frequency hopping is utilized for minimizing interference.

In connection with the description of the measuring device 111 used as an example in Fig. 1, it has been set forth that the measuring device 111 advantageously comprises a transceiver (Rx/Tx) 111a, an antenna 111b and two sensors. In the example of Fig. 2, these two sensors are the pressure sensor (P) 111c and the temperature sensor (T) 111d. Corresponding parts can also be found from other measuring devices 112 to 132 shown in the example of Fig. 2. It is obvious to a person skilled in the art that other measuring sensors measuring the properties of the process than those presented in Fig. 2 can be connected to an individual measuring device.

In the example of Fig. 2, three measuring devices, 121, 122 and 123, are connected to node 12 via radio connection 120. Similarly, two measuring devices, 131 and 132, are connected to node 13 via radio connection 130. Radio connections 120 and 130 are advantageously radio connections of the lowest level having a fixed frequency, like radio connection 110. Via radio connection 102, node 12 is connected to node 13, and via radio connection 103 to the network coordinator 11. Via the radio connection 101, a communications connection is established between the node 13 and the network coordinator 11.

The network coordinator 11 also manages communications with other devices shown in Fig. 2. The communications connections 141, 151, 161 and 171 from the network coordinator 11 to other devices may be radio connections or fixed cable connections. In the example of Fig. 2, the network coordinator 11 is connected to a monitoring unit of the automation system via the communications connection 141, and in the monitoring unit advantageously to the control unit 14 of the automation system. Via the communications connection 151, the device arrangement according to the invention provides the possibility of establishing a connection from the network coordinator 11 to a personal computer 15 (PC). Similarly, the network coordinator 11 can be connected to the Internet 161 via a communications connection 161. The communications connection 171 enables establishing a modem or ADSL connection 17 (Asymmetric Digital Subscriber Line) to an external communications network.

In the radio network according to the invention, the devices operating both as base stations and measuring devices can be implemented by the LTCC or HTCC technique, for example.

Some advantageous embodiments of the measurement arrangement and measuring device according to the invention have been described above. The invention is not limited to the above described embodiments only, but the inventive idea can be applied in numerous ways within the scope defined by the claims.

## Claims

1. A measurement arrangement (10) comprising measuring devices (11, 12, 13, 111-132) with their sensors (111c, 111d), in which measurement arrangement the measuring devices form a self-organized radio network having at least two levels (101, 102, 103, 110, 120, 130), which can be connected to an external device 14, 15) or communications network (16, 17) via at least one measuring device (11) belonging to the highest level (101, 102, 103) of said radio network, on which highest level of the radio network a particular communication protocol has been arranged to be utilized, **characterized in that** in order to maximize the operating time of the power source (111f) of the measuring device on the lowest level of said radio network in an individual measuring cell (110, 120, 130) comprising at least a master device (11) of the measuring cell and at least one measuring device (111, 112), messages are arranged to be transmitted in the communication between the measuring device and the master device with a non-standardized communication procedure using only FM, AM, OOK or AM/FM modulated signal on at least one frequency.

2. The measurement arrangement according to Claim 1, **characterized in that** the transmission frequency used in the communication between the master device (11) of the measuring cell and one measuring device (111, 112) is fixed.

3. The measurement arrangement according to Claim 2, **characterized in that** measuring devices (111, 112) belonging to the same measuring cell are arranged to use in their communication a different transmission frequency with the master device (11) of their cell.

4. The measurement arrangement according to Claim 1, **characterized in that** frequency hopping is arranged to be used in communication between the measuring device (111, 112) and the master device (11).

5. The measurement arrangement according to Claim 2 or 4, **characterized in that** the measuring device (111, 112) belonging to the measuring cell is in the sleep mode when it has not been programmed or ordered to carry out a measurement.

6. The measurement arrangement according to Claim 1, **characterized in that** the master device (11, 12, 13) of the measuring cell is arranged to operate as the base station of said individual measuring cell in said radio network of the lowest level and that the master devices (11, 12, 13) belonging to the measurement arrangement form the highest level of said radio network.

7. The measurement arrangement according to Claim 6, **characterized in that** said radio network of the highest level is one of the following: a ZigBee radio network, a Bluetooth radio network or a WLAN radio network.

8. The measurement arrangement according to Claim 1, **characterized in that** a process under the control of an external control unit (14) is arranged to be controlled by the measurement information obtained from the measuring arrangement.

9. A wireless measuring device (111) of the lowest level (110, 120, 130) of a measurement arrangement implemented by a radio network (101, 102, 103, 110, 120, 130) having at least two levels, which wireless measuring device comprises at least one measuring sensor (111 c, 111 d), an antenna (111 b), a power source (111f), a central control unit (111e) for processing the measurement information of the measuring sensors and a transceiver (111 a) for transmitting the measurement information wirelessly to another measuring device of the same radio network, **characterized in that** in order to maximize the operating time of the power source (111f) of the measuring device (111), the measuring device (111) is arranged to send its message in said radio network to another measuring device (11) belonging to a higher level (101, 102, 103) of the radio network with a non-standardized communication procedure utilizing only as FM, AM, OOK or AM/FM modulated signal on at least one frequency.

10. The measuring device according to Claim 9, **characterized in that** the transmission frequency used by the measuring device is fixed.

11. The measuring device according to Claim 9, **characterized in that** the measuring device (111) is arranged to utilize frequency hopping in the transmission of messages to another measuring device (11).

12. The measuring device according to Claim 10 or 11, **characterized in that** the measuring device (111, 112) is in a sleep mode consuming little power when it has not been ordered to carry out a measurement or to send a measurement result.

13. The measuring device according to Claim 9, **characterized in that** the measuring sensor (111c, 111d) is one of the following: temperature sensor, pressure sensor, acceleration sensor, humidity sensor, position sensor, light intensity sensor, surface level sensor or rotation speed sensor.

14. The measuring device according to Claim 9, **characterized in that** it is encapsulated by the LTCC or HTCC technique into a hermetic capsule.

## Patentansprüche

1. Messanordnung (10) mit Messgeräten (11, 12, 13, 111 - 132) mit jeweiligen Sensoren (111c, 111d), wobei die Messgeräte in der Messanordnung ein selbstorganisiertes Funknetzwerk mit mindestens zwei Ebenen (101, 102, 103, 110, 120, 130) bilden, das über mindestens eine der höchsten Ebene (101, 102, 103) des Funknetzwerks zugehöriges Messgerät (11) mit einem externen Gerät (14, 15) oder mit einem Kommunikationsnetzwerk (16, 17) verbindbar ist, wobei auf der höchsten Ebene des Funknetzwerks ein bestimmtes Kommunikationsprotokoll verwendet wird;
**dadurch gekennzeichnet, dass**
zum Maximieren der Betriebszeit einer Energiequelle (111f) des Messgeräts auf der untersten Ebene des Funknetzwerks in einer individuellen Messzelle (110, 120, 130), die mindestens ein Mastergerät (11) der Messzelle und mindestens eine Messgerät (111, 112) aufweist, während der Kommunikation zwischen dem Messgerät und dem Mastergerät Meldungen durch ein nicht-standardisiertes Kommunikationsverfahren unter Verwendung nur eines FM-, AM-, OOK- oder AM/FM-modulierten Signals auf mindestens einer Frequenz übertragen werden.

2. Messanordnung nach Anspruch 1, **dadurch gekennzeichnet, dass** die für die Kommunikation zwischen dem Mastergerät (11) der Messzelle und einem Messgerät verwendete Sendefrequenz fest ist.

3. Messanordnung nach Anspruch 2, **dadurch gekennzeichnet, dass** der gleichen Messzelle zugehörige Messgeräte (111, 112) dafür konfiguriert sind, für ihre Kommunikation mit dem Mastergerät (11) ihrer Zelle verschiedene Frequenzen zu verwenden.

4. Messanordnung nach Anspruch 1, **dadurch gekennzeichnet, dass** für die Kommunikation zwischen dem Messgerät (111, 112) und dem Mastergerät (11) ein Frequenzsprungverfahren verwendet wird.

5. Messanordnung nach Anspruch 2 oder 4, **dadurch gekennzeichnet, dass** das der Messzelle zugehörige Messgerät (111, 112) auf den Ruhemodus eingestellt ist, wenn es nicht programmiert oder angewiesen ist, eine Messung auszuführen.

6. Messanordnung nach Anspruch 1, **dadurch gekennzeichnet, dass**
das Mastergerät (11, 12, 13) der Messzelle dafür konfiguriert ist, als die Basisstation der individuellen Messzelle im Funknetzwerk der untersten Ebene zu arbeiten, und
die der Messanordnung zugehörigen Mastergeräte (11, 12, 13) die höchste Ebene des Funknetzwerks bilden.

7. Messanordnung nach Anspruch 6, **dadurch gekennzeichnet, dass** das Funknetzwerk der höchsten Ebene eines der folgenden Netzwerke ist, ein Zig-Bee-Funknetzwerk, ein Bluetooth-Funknetzwerk oder ein WLAN-Funknetzwerk.

8. Messanordnung nach Anspruch 1, **dadurch gekennzeichnet, dass** ein Prozess unter der Steuerung einer externen Steuereinheit (14) dafür konfiguriert ist, durch von der Messanordnung erhaltene Messinformation gesteuert zu werden.

9. Drahtlosmessgerät (111) der untersten Ebene (110, 120, 130) einer durch ein Funknetzwerk (101, 102, 103, 110, 120, 130) mit mindestens zwei Ebenen implementierten Messanordnung, wobei das Drahtlosmessgerät mindestens einen Messsensor (111c, 111d), eine Antenne (111b), eine Energiequelle (111f), eine zentrale Steuereinheit (111e) zum Verarbeiten der Messinformation der Messsensoren und einen Transceiver (111a) zum drahtlosen Übertragen der Messinformation an ein anderes Messgerät des gleichen Funknetzwerks aufweist,
**dadurch gekennzeichnet, dass**
zum Maximieren der Betriebszeit der Energiequelle (111f) des Messgeräts (111) das Messgerät (111) dafür konfiguriert ist, seine Meldung im Funknetzwerk durch ein nicht-standardisiertes Kommunikationsverfahren, das nur ein FM-, AM-, OOK- oder AM/FM-moduliertes Signal verwendet, auf mindestens einer Frequenz an ein einer höheren Ebene (101, 102, 103) des Funknetzwerks zugehöriges anderes Messgerät (11) zu übertragen.

10. Messgerät nach Anspruch 9, **dadurch gekennzeichnet, dass** die durch das Messgerät verwendete Sendefrequenz fest ist.

11. Messgerät nach Anspruch 9, **dadurch gekennzeichnet, dass** das Messgerät (111) dafür konfiguriert ist, für die Übertragung von Meldungen an ein anderes Messgerät (11) ein Frequenzsprungverfahren zu verwenden.

12. Messgerät nach Anspruch 10 oder 11, **dadurch gekennzeichnet, dass** das Messgerät (111, 112) sich in einem Ruhemodus befindet, in dem es wenig Energie verbraucht, wenn es nicht angewiesen worden ist, eine Messung auszuführen oder ein Messergebnis zu übertragen.

13. Messgerät nach Anspruch 9, **dadurch gekennzeichnet, dass** der Messsensor (111 c, 111 d) einer der folgenden Sensoren ist: ein Temperatursensor, ein Drucksensor, ein Beschleunigungssensor, ein Feuchtigkeitssensor, ein Positionssensor, ein Lichtintensitätssensor, ein Oberflächenpegelsensor oder ein Drehzahlsensor.

14. Messgerät nach Anspruch 9, **dadurch gekennzeichnet, dass** es durch die LTCC- oder HTCC-Technik in einer hermetisch verschlossenen Kapsel eingekapselt ist.

## Revendications

1. Système de mesure (10) comprenant des dispositifs de mesure (11, 12, 13, 111-132) avec leurs capteurs (111c; 111d), dans lequel système de mesure les dispositifs de mesure forment un réseau radio auto-organisé ayant au moins deux niveaux (101, 102, 103, 110, 120, 130), qui peut être connecté à un dispositif externe (14, 15) ou un réseau de communications (16, 17) via au moins un dispositif de mesure (11) appartenant au plus haut niveau (101, 102, 103) dudit réseau radio, sur lequel plus haut niveau du réseau radio, un protocole de communication particulier a été conçu pour être utilisé, **caractérisé en ce qu'**afin de maximiser le temps de fonctionnement de la source d'alimentation (111f) du dispositif de mesure sur le plus bas niveau dudit réseau radio dans une cellule de mesure individuelle (110, 120, 130) comprenant au moins un dispositif maître (11) de la cellule de mesure et au moins un dispositif de mesure (111, 112), les messages sont conçus pour être transmis dans la communication entre le dispositif de mesure et le dispositif maître avec une procédure de communication non normalisée en utilisant uniquement un signal modulé en FM, AM, OOK ou AM/FM sur au moins une fréquence.

2. Système de mesure selon la revendication 1, **caractérisé en ce que** la fréquence de transmission utilisée dans la communication entre le dispositif maître (11) de la cellule de mesure et un dispositif de mesure (111, 112) est fixe.

3. Système de mesure selon la revendication 2, **caractérisé en ce que** les dispositifs de mesure (111, 112) appartenant à la même cellule de mesure sont conçus pour utiliser dans leur communication une fréquence de transmission différente avec le dispositif maître (11) de leur cellule.

4. Système de mesure selon la revendication 1, **caractérisé en ce que** le saut de fréquence est conçu pour être utilisé dans la communication entre le dispositif de mesure (111, 112) et le dispositif maître (11).

5. Système de mesure selon la revendication 2 ou 4, **caractérisé en ce que** le dispositif de mesure (111, 112) appartenant à la cellule de mesure est dans le mode de veille lorsqu'il n'a pas été programmé pour effectuer une mesure ou n'en a pas reçu l'ordre.

6. Système de mesure selon la revendication 1, **caractérisé en ce que** le dispositif maître (11, 12, 13) de la cellule de mesure est conçu pour être utilisé comme la station de base de ladite cellule de mesure individuelle dans ledit réseau radio du plus bas niveau et **en ce que** les dispositifs maîtres (11, 12, 13) appartenant au système de mesure forment le plus haut niveau dudit réseau radio.

7. Système de mesure selon la revendication 6, **caractérisé en ce que** ledit réseau radio du plus haut niveau est l'un des réseaux suivants : un réseau radio ZigBee, un réseau radio Bluetooth ou un réseau radio WLAN.

8. Système selon la revendication 1, **caractérisé en ce qu'**un procédé sous le contrôle d'une unité de commande externe (14) est conçu pour être contrôlé par les informations de mesure obtenues du système de mesure.

9. Dispositif de mesure sans fil (111) du plus bas niveau (110, 120, 130) d'un système de mesure mis en oeuvre par un réseau radio (101, 102, 103, 110, 120, 130) ayant au moins deux niveaux, lequel dispositif de mesure sans fil comprend au moins un capteur de mesure (111c, 111d), une antenne (111b), une source d'alimentation (111f), une unité de commande centrale (111e) pour traiter les informations de mesure des capteurs de mesure et un émetteur-récepteur (111a) pour transmettre les informations de mesure sans fil vers un autre dispositif de mesure du même réseau radio, **caractérisé en ce qu'**afin de maximiser le temps de fonctionnement de la source d'alimentation (111f) du dispositif de mesure (111), le dispositif de mesure (111) est conçu pour envoyer son message dans ledit réseau radio vers un autre dispositif de mesure (11) appartenant à un plus haut niveau (101, 102, 103) du réseau radio avec une procédure de communication non normalisée utilisant uniquement un signal modulé en FM, AM, OOK ou AM/FM sur au moins une fréquence.

10. Dispositif de mesure selon la revendication 9, **caractérisé en ce que** la fréquence de transmission utilisée par le dispositif de mesure est fixe.

11. Dispositif de mesure selon la revendication 9, **caractérisé en ce que** le dispositif de mesure (111) est conçu pour utiliser le saut de fréquence dans la transmission de messages vers un autre dispositif de mesure (11).

12. Dispositif de mesure selon la revendication 10 ou 11, **caractérisé en ce que** le dispositif de mesure (111, 112) est dans un mode de veille consommant peu d'énergie lorsqu'il n'a pas reçu l'ordre d'effectuer une mesure ou d'envoyer un résultat de mesure.

13. Dispositif de mesure selon la revendication 9, **caractérisé en ce que** le capteur de mesure (111c, 111d) est un des capteurs suivants : capteur de température, capteur de pression, capteur d'accélération, capteur d'humidité, capteur de position, capteur d'intensité lumineuse, capteur de niveau de surface ou capteur de vitesse de rotation.

14. Dispositif de mesure selon la revendication 9, **caractérisé en ce qu'**il est encapsulé par la technique LTCC ou HTCC dans une capsule hermétique.
